# FASCICULE DE BREVET EUROPEEN

(11) **EP 0 716 325 B1**
(45) Date de publication et mention de la délivrance du brevet: **05.03.2003**
(21) Numéro de dépôt: 95402726.4
(22) Date de dépôt: 04.12.1995
(51) Int. Cl.: G02B 6/44

(54) **Boîte d'épissurage de câbles à fibres optiques**
Faseroptisches Kabelverbindungsgehäuse
Splicebox for a fibre optical cable

(30) Priorité: 08.12.1994 FR 9414775
(43) Date de publication de la demande: 12.06.1996
(73) Titulaire: ALCATEL CABLE INTERFACE, 08330 Vrigne aux Bois (FR)
(72) Inventeur: Vincent, Alain, F-77230 Juilly (FR); Milanowski, Michel, F-60540 Anserville (FR)
(74) Mandataire: Feray, Valérie

(56) Documents cités:
- EP-A- 0 397 587
- EP-A- 0 589 618
- EP-A- 0 637 767
- FR-A- 2 682 775
- GB-A- 2 151 041
- US-A- 4 805 979
- US-A- 4 974 925

## Description

La présente invention porte sur une boîte d'épissurage de câbles à fibres optiques, à l'intérieur de laquelle les câbles sont immobilisés et leurs fibres rendues accessibles et libres sont raccordées.

Le document FR-A-2 682 775 décrit un dispositif d'amarrage d'un câble, sur lequel le câble est immobilisé à l'extérieur d'une boite d'épissurage et qui est alors fixé de manière amovible dans la boîte.

Ce dispositif est constitué par une semelle amovible, présentant une partie plane arrière, sur laquelle le câble est reçu gainé et est immobilisé, et une partie plane avant, sur laquelle les fibres du câble dégainé sont libres et sont en surlongueur sur son extrémité avant. Un berceau se présentant sous la forme d'un bloc parallélépipédique et comprenant une gorge semi-cylindrique relie les parties planes arrière et avant et reçoit le câble dégainé. Un pion de centrage sous le berceau et un trou dans la partie avant de la semelle permettent le positionnement et la fixation à l'aide d'une vis de la semelle dans la boîte, sur un socle ou plateau, dit support intérieur de la boîte. Plusieurs semelles peuvent être fixées sur le plateau intérieur, de long de deux des parois latérales opposées de la boîte de forme généralement parallélépipédique. Des emplacements pour les semelles sont prévus sur ce support et définis par un couple de trous recevant le pion de centrage et la vis de fixation de chaque semelle. Des accès correspondants sont prévus sur les deux parois latérales opposées concernées de la boîte pour les câbles immobilisés préalablement sur les semelles respectives.

La capacité maximale de cette boîte d'épissurage est atteinte dès lors que les emplacements prévus pour les semelles, le long des deux parois latérales opposées de la boîte, sont occupés par une semelle en place sur chacun d'eux.

Le document EP-0 397 587 décrit également une boîte d'épissurage de ce type.

La présente invention a pour but d'accroître la capacité de la boîte d'épissurage, pour des dimensions inchangées du support intérieur affecté à la fixation des semelles d'immobilisation de câbles individuels, en rendant possible un montage plus compact des semelles sur ce support intérieur.

Elle a pour objet une boîte d'épissurage de câbles à fibres optiques, comportant un corps de boîtier muni d'accès latéraux pour lesdits câbles, des semelles d'amarrage des câbles individuels et des moyens de lovage des fibres desdits câbles et de maintien de raccords d'épissurage desdites fibres; lesdites semelles d'amarrage étant fixées de manière amovible sur un support intérieur dudit corps de boîtier, ayant l'un desdits câbles préalablement immobilisé sur chacune d'elles avec les fibres de ce câble libres et en surlongueur sur une extrémité dite avant de la semelle et assurant par une pièce unique l'immobilisation du câble gainé et le maintien des fibres du câble dégainé, chaque accès dudit corps de boîtier étant affecté à la réception possible de plusieurs câbles préalablement immobilisés sur leurs semelles respectives d'amarrage et lesdites semelles étant superposées à l'aide de moyens (32) de superposition au moins partiellement les unes aux autres dans le corps de boîtier au droit du même accès recevant plusieurs câbles et ainsi fixées sur ledit support.

Cette boîte présente avantageusement en outre au moins l'une des caractéristiques additionnelles suivantes :
- ledit support présente un jeu de trous situé en regard de chaque accès et affecté à la fixation amovible de plusieurs semelles d'amarrage.
- ladite boîte comporte des moyens de guidage et d'étanchéité de chaque câble dans chaque accès, comportant au moins une bague relativement rigide de guidage de chaque câble dans l'accès, une bague déformable d'étanchéité et un écrou extérieur de serrage desdites bagues dans l'accès et autour de chaque câble.
- ladite semelle est de section droite en U, au moins sur une moitié dite avant de sa longueur.
- ladite semelle comporte une base plane, présentant une première largeur sur ladite moitié avant et une deuxième largeur sensiblement inférieure à la première sur l'autre moitié arrière, et un plot terminal avant solidaire de ladite base, saillant axialement sur celle-ci et percé d'un trou sur sa hauteur, pour la fixation de ladite semelle à l'aide d'une vis.

Les caractéristiques et avantages de la présente invention ressortiront de la description faite ci-après d'un mode de réalisation donné à titre d'exemple dans les dessins ci-annexés. Dans ces dessins :
- La figure 1 est une vue de côté d'une boîte d'épissurage selon l'invention,
- La figure 2 est une vue de dessus de la boite, montrée fermée sur une partie de cette figure et ouverte et partiellement équipée sur l'autre partie de la figure 2,
- La figure 3 est une vue en coupe d'un accès équipé de la boite de la figure 1,
- La figure 4 est une vue en coupe correspondant à la figure 3 pour une variante d'équipement de l'accès,
- La figure 5 est une vue de dessus d'une semelle amovible d'amarrage de câble, pour la boîte d'épissurage,
- La figure 6 est une vue en coupe de cette semelle, selon la ligne VI-VI de la figure 5.

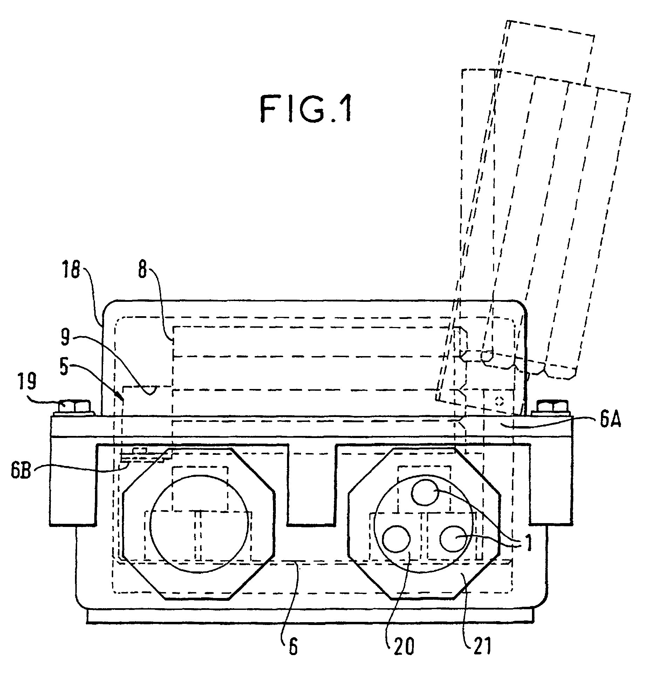

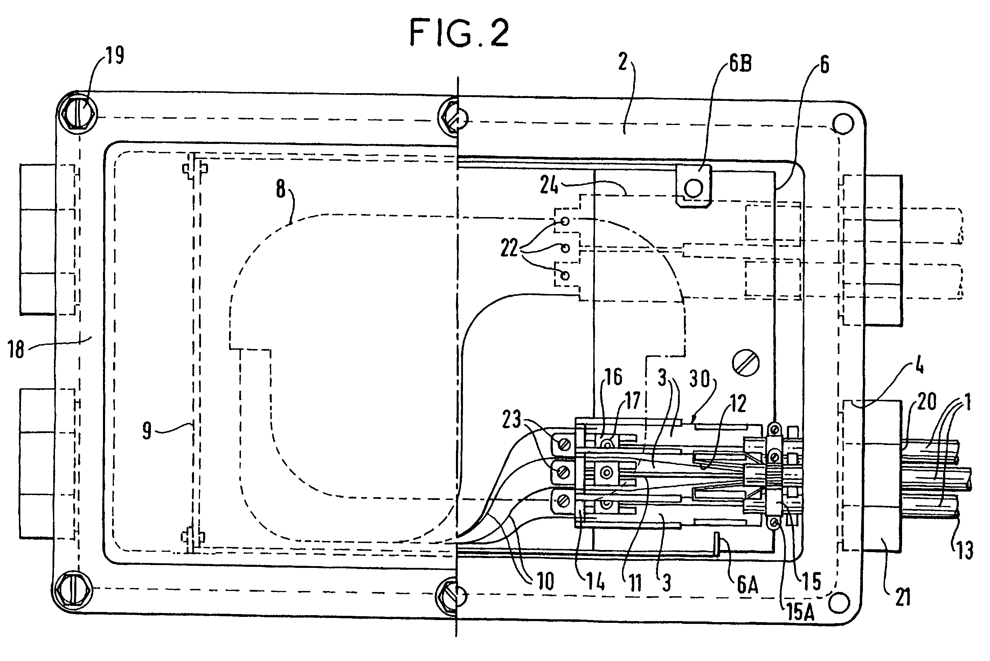

Les figures 1 et 2 montrent une boîte d'épissurage de câbles 1 à fibres optiques 10, comportant un corps de boîtier 2 dans lequel sont fixées des semelles amovibles d'amarrage 3 des câbles. Chaque câble est immobilisé sur l'une des semelles avant la fixation de cette semelle dans le corps de boîtier.

Le corps de boîtier est pourvu d'accès cylindriques 4 dans ses deux petites parois latérales, pour les câbles préparés et immobilisés préalablement sur leurs semelles. Il a sa face supérieure ouverte à travers laquelle est monté un ensemble organiseur 5 d'épissures des fibres.

Dans cette réalisation, on voit que les semelles 3 sont fixées de manière amovible sur un support 6, lui-même fixé dans le fond du corps de boîtier. Le support présente deux cornières d'articulation 6A et deux cornières d'appui 6B, saillantes sur le support 6 sensiblement sur la hauteur du corps de boîtier. L'ensemble organiseur 5 comporte quant à lui des cassettes 8, empilables les unes sur les autres et articulées les unes aux autres sensiblement selon l'un de leurs bords. Ces cassettes sont portées par un plateau 9, en U, monté articulé sur les deux cornières 6A et reçu en appui sur les deux cornières 6B. Ce plateau 9 s'étend au-dessus des semelles d'amarrage en place dans le corps de boîtier. Il s'ouvre autour de l'axe d'articulation défini par les deux cornières 6A pour l'accès à la partie inférieure du corps de boîtier, en vue de la mise en place des semelles ou d'une intervention sur l'une des semelles en place.

Ainsi qu'il apparaît dans la figure 2, chaque câble à fibres optiques comporte un porteur central 11, une pluralité de fibres 10 autour du porteur, des mèches 12 de renfort périphérique autour des fibres et une gaine extérieure 13. Les fibres sont en général protégées individuellement ou par groupe dans des tubes de protection, non représentés, et/ou sont montés dans les rainures d'un jonc rainuré, non représenté également.

L'amarrage de chaque câble préparé sur sa semelle d'amarrage est effectué à l'extérieur du corps de boîtier, avant la fixation de la semelle dans ce dernier. Il est réalisé en immobilisant le câble gainé sur une partie arrière de la semelle, à l'aide d'un collier 15 et d'une vis latérale de serrage 15A du collier autour du câble. Le câble dégainé juste au delà du collier 15 a ses fibres libres et laissées en surlongueur sur l'avant de la semelle et ses mèches de renfort arrêtées et bloquées sous ce collier. Son porteur central est lui-même arrêté et bloqué sur la partie avant de la semelle, dans un écrou de blocage 16, ou autre moyen de blocage le recevant, à l'aide d'une vis de serrage 17.

Les fibres optiques 10, sont reçues et guidées dans un patin mousse, 14, qui est fendu et est retenu sur la partie avant de la semelle.

Bien entendu la constitution de chaque câble et son mode d'amarrage peuvent être légèrement différents.

La boîte d'épissurage comporte en outre un couvercle 18, qui coiffe l'ensemble organiseur 5 et est fixé par des vis 19 sur la périphérie de la face supérieure du corps de boîtier. Un joint périphérique, non représenté, assure l'étanchéité entre le corps de boîtier et le couvercle.

Selon l'invention, chaque accès 4 est prévu pour la réception possible de plusieurs câbles préalablement immobilisés sur leurs semelles individuelles 3, identiques les unes aux autres et superposées les unes sur les autres pour leur fixation sur le support 6 dans la boîte. Ainsi, chaque accès reçoit un seul câble, si ce câble est de grosse section, reçoit un ou deux câbles si ceux-ci sont de moyenne section et reçoit de un à trois ou quatre câbles si ceux-ci sont de petite section. Les câbles de grosse section sont d'une première gamme définie, ceux de moyenne section d'une deuxième gamme et ceux de petite section d'une troisième gamme. Le nombre de fibres optiques dépend de la section du câble concerné.

Un ensemble de guidage et d'étanchéité 20 assure le maintien étanche du ou des câbles gainés traversant chaque accès. Il est bloqué dans l'accès et autour du ou des câbles par un écrou extérieur 21, lui-même traversé par ce ou ces câbles.

Sur le support 6, un jeu de trous filetés 22 est prévu en regard de chaque accès et permet la fixation des semelles d'amarrage, pour le jeu maximal possible de câbles reçus dans l'accès, chaque trou 22 étant affecté à la fixation d'une semelle ou éventuellement de deux semelles alors superposées. Cette fixation est assurée à l'aide d'une vis 23 reçue à travers la partie avant de la semelle dans l'un des trous 22.

Dans la figure 2, chaque jeu de trous 22 comporte trois trous alignés et situés au droit de chaque accès et permet la fixation d'un jeu 30 de trois semelles d'amarrage de trois câbles. On a représenté en pointillés, en regard de l'un des accès non encore équipé, deux emplacements 24 pour deux semelles sensiblement côte à côte sur le support 6, qui sont définis par les deux trous extrêmes du jeu de trous 22. Le troisième trou 22 entre les deux précédents définit lui-même un autre emplacement sur le support pour une seule semelle d'amarrage d'un câble de grosse section, ou l'emplacement sur ce support de deux semelles superposées l'une sur l'autre et fixées par une vis unique dite longue dans ce trou intermédiaire 22, ou encore l'emplacement relativement à ce support d'une semelle qui est superposée sur deux semelles déjà fixées sur les deux trous extrêmes 22 et qui repose sur les bords longitudinaux en vis-à-vis de l'une et de l'autre de ces deux semelles, respectivement.

En variante non représentée, le jeu de trous affectés à la fixation de semelles d'amarrage peut comporter deux autres trous juste à l'avant des deux trous extrêmes 22 précédents, pour la fixation de quatre semelles superposées deux à deux, avec les semelles supérieures légèrement saillantes à l'avant des semelles inférieures.

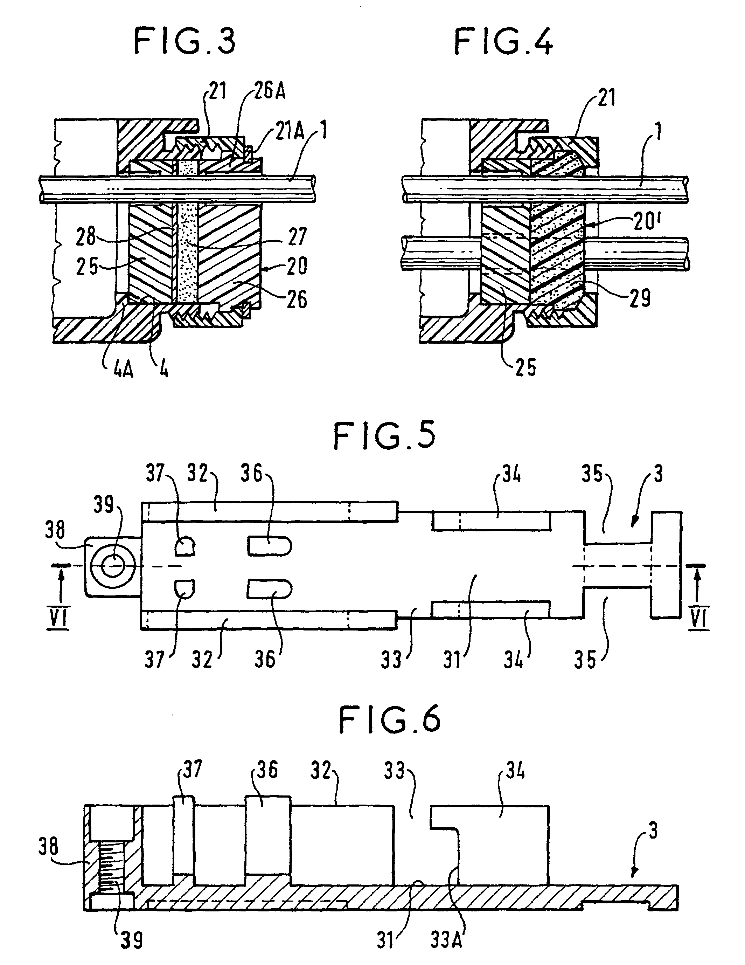

La figure 3 montre la réalisation de l'ensemble de guidage et d'étanchéité 20 dans l'accès 4 équipé de figure 2. Cet ensemble comporte une bague fixe de guidage 25, dans l'accès 4 et en butée contre un épaulement intérieur avant 4A de cet accès, une bague mobile de guidage 26, qui est montée dans l'écrou 21, et une bague d'étanchéité 27 interposée entre les deux bagues de guidage. L'écrou est dans cette réalisation libre en rotation sur la périphérie de la bague mobile 26 et bloqué longitudinalement sur cette bague entre un épaulement périphérique intermédiaire 26A de la bague et un circlips arrière de blocage 21A.

Les bagues de guidage sont relativement rigides. La bague d'étanchéité est déformable par compression, de sorte que son matériau flue sur la périphérie de l'ensemble 20 et autour des câbles en place, lors du serrage de l'écrou. Elle est avantageusement associée à une rondelle métallique 28, interposée entre elle et la bague fixe de guidage. Cette rondelle fait que la bague d'étanchéité n'adhère pas contre elle mais reste solidaire de la bague mobile, lors du dévissage de l'écrou préalablement serré.

Les bagues 25 et 26 et la rondelle sont percées de passages pour les câbles individuels pouvant être reçus dans l'accès. Elles sont choisies en conséquence dès le premier câble à monter dans cet accès, la section de ce premier câble permettant ou non le montage en même temps ou ultérieurement d'autres câbles. On précise que lorsqu'un accès est initialement sous équipé, c'est-à-dire reçoit un seul câble mais peut en recevoir au moins un autre, chaque passage non utilisé est obturé par un bouchon approprié.

La bague d'étanchéité est quant à elle percée d'un seul ou de plusieurs passages, selon le nombre de câbles traversant l'accès. Elle est interchangeable. Lorsque l'accès sous équipé est complété, on élimine la bague d'étanchéité initiale, se présentant solidaire de la bague mobile dans l'écrou dévissé, et on la remplaçe par une nouvelle bague d'étanchéité. Chaque passage dans la bague d'étanchéité est à cet effet fendu jusqu'à sa périphérie pour la mise en place de cette bague.

On précise aussi que lorsqu'un accès sous équipé est complété, on dégage l'ensemble d'étanchéité de l'accès et le long des câbles déjà maintenus dans la boîte, en dévissant l'écrou 21. Un câble supplémentaire est enfilé dans un passage non utilisé et préalablement débouché des bagues de guidage. Il est préparé et immobilisé sur sa propre semelle d'amarrage, à l'extérieur de la boîte, cette semelle étant à son tour fixée dans la boîte. L'ensemble de maintien et d'étanchéité, pourvu d'une nouvelle bague d'étanchéité, est remis en place et serré dans l'accès.

La figure 4 montre une variante de réalisation de l'ensemble de maintien et d'étanchéité de la figure 3. Cet ensemble noté 20' diffère du précédent par un joint d'étanchéité 29 dans l'écrou, qui fonctionnellement remplace la bague mobile, la bague d'étanchéité et la rondelle métallique de l'ensemble précédent.

Les figures 5 et 6 montrent l'une des semelles identiques et superposables 3, celle-ci étant décrite en se référant également à la figure 2 pour les parties rapportées d'immobilisation du câble gainé et de blocage du porteur central du câble.

La semelle est une pièce en U, ayant une base plane 31 et deux joues latérales opposées 32. Chaque joue présente une encoche 33, qui est réalisée sur la hauteur de la joue et sensiblement à mi longueur de la base, ainsi divisée en une moitié arrière et une moitié avant. Les deux joues sont tronquées sur leur hauteur, sur la seule partie terminale arrière de la semelle.

La moitié arrière de la base est de largeur légèrement moindre que celle de la moitié avant. En correspondance et en excluant la partie terminale arrière de la semelle, les joues latérales sur la moitié arrière de la base sont légèrement en retrait sur celles le long de la moitié avant de cette base et forment à ce niveau deux ailettes latérales 34.

Ces deux ailettes latérales 34 sont affectées au guidage et maintien des mèches de renfort du câble, reçues dans les encoches 33 et guidées sur au moins un tour autour des ailettes. Une échancrure 33A dans la partie inférieure du bord arrière de chaque encoche maintient ces mèches sous le bord supérieur épaulé résultant de chaque ailette.

La partie terminale arrière de la base présente elle-même deux encoches latérales opposées 35, pour l'immobilisation du câble gainé sur cette partie terminale arrière par le collier de serrage 15 reçu dans ces deux encoches. Les mèches guidées de l'avant à l'arrière contre la face extérieure de chaque ailette sont bloquées en même temps sous ce collier de serrage.

Les ailettes 34 et les joues 32 de la moitié avant sont de même hauteur sur la base 31.

Le câble dégainé au-delà de son immobilisation par le collier de serrage est guidé entre les deux ailettes. Ses fibres dégagées et nues sont protégées par les deux joues 32 de la moitié avant. Son porteur 11 est arrêté et bloqué dans une partie quasi terminale avant de la semelle dans l'écrou de blocage 16, rapporté à ce niveau.

Une première paire de plots opposés de guidage 36 et une deuxième paire de plots opposés de guidage 37 sont prévues à la suite l'une de l'autre parallèlement aux joues 32 et entre elles. L'écrou de blocage 16 est rapporté entre elles et/ou est maintenu par un doigt de positionnement entre les deux plots de l'une des paires.

Les fibres nues sont guidées à ce niveau entre ces deux paires de plots et les deux joues 32 et à travers le patin mousse fendu, rapporté et retenu entre les deux joues, à l'avant de la paire de plots 37.

L'extrémité avant de la semelle forme un simple plot terminal axial 38, de fixation de la semelle. Ce plot est solidaire de la base et saillant au-dessus et à l'avant de celle-ci. Il maintient le patin mousse entre lui et les plots 37. Il est de même hauteur que les joues 32 et est percé sur sa hauteur d'un trou 39 pour la vis de fixation 23. La partie supérieure du trou 39 est de diamètre plus important que celui de sa partie inférieure, pour l'encastrement et la mise en butée intérieurement de la tête de cette vis.

En se référant à la figure 2, dans le jeu 30 des trois semelles 3, la semelle intermédiaire repose sur l'une des joues latérales de l'une et de l'autre des deux semelles extrêmes, qui reposent quant à elles directement sur le support 6 et sont dites semelles inférieures. Bien entendu, les semelles d'amarrage peuvent ne comporter qu'une seul joue latérale, d'un côté sur certaines semelles et de l'autre côté sur d'autres, pour l'appui sur deux semelles inférieures d'une troisième semelle superposée.

De préférence, on utilise un plot intercalaire d'appui sur le support 6, pour le plot terminal avant de la semelle intermédiaire superposée sur les deux semelles inférieures. Ce plot intercalaire non représenté est rapporté. Il est percé sur sa hauteur, pour la fixation à travers lui de cette semelle intermédiaire sur le support.

En variante, on peut superposer une semelle sur l'une ou chacune des deux semelles inférieures, dont les deux joues latérales servent d'appui à la semelle superposée. Cette semelle superposée peut être saillante légèrement ou non saillante à l'avant de la semelle inférieure.

Les dispositions des semelles d'amarrage de câbles reçus par un même accès sont en pratique définies par le nombre de câbles possibles dans cet accès, ce nombre étant lui-même fonction de la section de ces câbles.

## Revendications

1. Boîte d'épissurage de câbles à fibres optiques, comportant un corps de boîtier muni d'accès latéraux pour lesdits câbles, des semelles d'amarrage des câbles individuels et des moyens de lovage des fibres desdits câbles et de maintien de raccords d'épissurage desdites fibres ; lesdites semelles d'amarrage étant fixées de manière amovible sur un support intérieur dudit corps de boîtier, ayant l'un desdits câbles préalablement immobilisé sur chacune d'elles, avec les fibres de ce câble libres et en surlongueur sur une extrémité dite avant de la semelle et assurant par une pièce unique l'immobilisation du câble gainé et le maintien des fibres du câble dégainé, chaque accès (4) dudit corps de boîtier (2) étant affecté à la réception possible de plusieurs câbles (1) préalablement immobilisés sur leurs semelles respectives d'amarrage (3) et lesdites semelles (3) étant superposées à l'aide de moyens (32) de superposition au moins partiellement les unes aux autres dans le corps de boîtier au droit du même accès recevant plusieurs câbles et ainsi fixées sur ledit support.

2. Boîte d'épissurage selon la revendication 1, **caractérisée en ce que** ledit support présente un jeu de trous (22), situé en regard de chaque accès (4) et affecté à la fixation amovible de plusieurs semelles d'amarrage.

3. Boîte d'épissurage selon la revendication 2, **caractérisée en ce que** ledit jeu de trous (22) comporte au moins deux premiers trous, dits extrêmes dans ledit jeu, pour la fixation de deux semelles (3) disposées sensiblement côte-à-côte sur ledit support (6) et dites inférieures.

4. Boite d'épissurage selon la revendication 3, **caractérisée en ce que** ledit jeu de trous (22) comporte un troisième trou entre les deux premiers extrêmes, pour la fixation sélective d'une seule semelle reçue sur ledit support et dite inférieure ou d'une autre semelle superposée sur la seule semelle inférieure ou sur les deux semelles inférieures côte-à-côte.

5. Boîte d'épissurage selon l'une des revendications 1 à 4, **caractérisée en ce qu'**elle comporte des moyens de guidage et d'étanchéité (20) de chaque câble (1) dans chaque accès, comportant au moins une bague relativement rigide (25, 26) de guidage de chaque câble dans l'accès, une bague déformable d'étanchéité (28, 29) et un écrou extérieur (21) de serrage desdites bagues dans l'accès et autour de chaque câble.

6. Boîte d'épissurage selon l'une des revendications 1 à 5, **caractérisée en ce que** ladite semelle (3) est de section droite en U, au moins sur une moitié dite avant de sa longueur.

7. Boîte d'épissurage selon la revendication 6, **caractérisée en ce que** ladite semelle comporte, une base plane (31) présentant une première largeur sur ladite moitié avant et une deuxième largeur sensiblement inférieure à la première sur l'autre moitié arrière, et un plot terminal avant (38) solidaire de ladite base, saillant axialement sur celle-ci et percé d'un trou sur sa hauteur, pour la fixation de ladite semelle à l'aide d'une vis (23).

8. Boite d'épissurage selon la revendication 7, **caractérisée en ce que** ladite semelle comporte deux ailettes latérales (34), saillantes de part et d'autre le long de la partie non terminale de ladite moitié arrière, et une encoche (33) entre chaque ailette (34) et chaque joue (32).

9. Boite d'épissurage selon l'une des revendications 1 à 8, **caractérisée en ce que** ladite semelle (3) porte un patin mousse fendu (14), retenu sur une partie terminale avant de cette semelle, recevant et guidant lesdites fibres libres (10).

## Claims

1. An optical fibre cable splicing box, comprising a casing body fitted with lateral entries for said cables, sole plates for clamping the individual cables and means of coiling the fibres of said cables and of holding splicing connections of said fibres; said clamping sole plates being anchored in a removable way on an internal support of said casing body, having one of said previously immobilised cables on each of them, with the fibres of this cable free and with extra length on one so-called front end of the sole plate and immobilising the shielded cable by a single component and holding the unshielded cable fibres, each entry (4) of said casing body (2) being assigned to the possible reception of several cables (1) previously immobilised on their respective clamping sole plates (3) and said sole plates (3) being overlaid using overlay means (32) at least partially over each other in the casing body in line with the same entry receiving several cables and so fixed onto said support.

2. A splicing box according to claim 1, **characterised in that** said support has a set of holes (22) located opposite each entry (4) and assigned to the removable anchoring of several clamping sole plates.

3. A splicing box according to claim 2, **characterised in that** said set of holes (22) comprises at least two first holes, called end holes in said set, for anchoring two sole plates (3) arranged approximately side by side on said support (6) and called lower sole plates.

4. A splicing box according to claim 3, **characterised in that** said set of holes (22) comprises a third hole between the two first end holes, for the selective anchoring of a single sole plate received on said support and called a lower sole plate or another sole plate overlaid over the single lower sole plate or over the two lower sole plates side by side.

5. A splicing box according to one of claims 1 to 4, **characterised in that** it comprises means (20) of routing and sealing each cable (1) in each entry, comprising at least one relatively rigid ring (25, 26) for routing each cable in the entry, a distortable sealing ring (28, 29) and an external nut (21) tightening said rings in the entry and around each cable.

6. A splicing box according to one of claims 1 to 5, **characterised in that** said sole plate (3) is of U-shaped cross-section, at least over a so-called front half of its length.

7. A splicing box according to claim 6, **characterised in that** said sole plate comprises a plane base (31) having a first width over said front half and a second width approximately lower than the first over the other rear half, and a front end stud (38) integral with said base, projecting axially above it and drilled from top to bottom with a hole, for anchoring said sole plate by means of a screw (23).

8. A splicing box according to claim 7, **characterised in that** said sole plate comprises two lateral fins (34), projecting on either side along the non end part of said rear half, and a notch (33) between each fin (34) and each flange (32).

9. A splicing box according to one of claims 1 to 8, **characterised in that** said sole plate (3) carries a split foam pad (14), held on a front end part of this sole plate, receiving and routing said free fibres (10).

## Patentansprüche

1. Spleißkasten für Lichtwellenleiterkabel, der einen Gehäusekörper mit seitlichen Zugängen für die besagten Kabel, Einbandsohlen für die einzelnen Kabel, Hebemittel für die Fasern der besagten Kabel und Haltemittel für die Spleißverbindungen der besagten Fasern aufweist, wobei die besagten Einbandsohlen abnehmbar auf einer inneren Auflage des besagten Gehäusekörpers befestigt sind, je eins der besagten Kabel vorangehend auf je einer der Sohlen immobilisiert werden, wobei die Fasern dieses Kabels freigesetzt sind und am sogenannten vorderen Ende in Überlänge sind, wobei durch ein einziges Teil die Immobilisierung des ummantelten Kabels und die Haltung der Fasern des entmantelten Kabels gewährleistet wird, jeder Zugang (4) des besagten Gehäusekörpers (2) der Aufnahme möglicherweise mehrerer vorangehend auf ihre entsprechende Einbandsohle (3) immobilisierten Kabel (1) zugeordnet ist, und wobei die besagten Sohlen (3) wenigstens teilweise durch Übereinanderlegungsmittel (32) im Gehäusekörper rechts von einem selben Zugang, der mehrere Kabel annimmt, übereinanderliegen und somit auf der besagten Auflage befestigt sind.

2. Spleißkasten nach Anspruch 1, **dadurch gekennzeichnet, dass** die besagte Auflage einen jedem Zugang (4) gegenüberliegenden Lochsatz (22) aufweist, und welcher der abnehmbaren Befestigung mehrerer Einbandsohlen bestimmt ist.

3. Spleißkasten nach Anspruch 2, **dadurch gekennzeichnet, dass** der Lochsatz (22) mindestens zwei erste, sogenannte Außenlöcher, im besagten Satz aufweist zur Befestigung von zwei Sohlen (3), die wesentlich nebeneinander auf der besagten Auflage (6) angeordnet sind und die sogenannten unteren Sohlen sind.

4. Spleißkasten nach Anspruch 3, **dadurch gekennzeichnet, dass** der Lochsatz (22) ein drittes Loch zwischen den zwei ersten Außenlöchern aufweist zur selektiven Befestigung einer einzigen Sohle, die auf der besagten Auflage aufgenommen wird und die sogenannte untere Sohle ist, oder einer Sohle, die über der einzigen unteren Sohle oder über den zwei nebeneinanderliegenden unteren Sohlen liegt.

5. Spleißkasten nach einem der Ansprüche 1 bis 4, **dadurch gekennzeichnet, dass** er Führungs- und Abdichtungsmittel (20) aufweist, welche mindestens einen relativ steifen Führungsring (25, 26) für jedes Kabel in jedem Zugang, einen verformbaren Dichtungsring (28, 29) und eine äußere Stellmutter (21) für die besagten Ringe im Zugang und um jedes Kabel herum umfassen.

6. Spleißkasten nach einem der Ansprüche 1 bis 5, **dadurch gekennzeichnet, dass** die besagte Sohle (3) im rechten Schnitt ein U bildet, mindestens auf der sogenannten vorderen Hälfte ihrer Länge.

7. Spleißkasten nach Anspruch 6, **dadurch gekennzeichnet, dass** die besagte Sohle einen flachen Untersatz (31) mit einer ersten Breitenmessung auf der besagten vorderen Hälfte und einer zweiten, im Vergleich zur ersten wesentlich kleineren Breitenmessung auf der anderen, hinteren Hälfte und einen vorderen Endklotz (38) umfasst, der formschlüssig mit dem besagten Untersatz verbunden ist, axial aus diesem hervorspringt und der Länge nach mit einem Loch zur Befestigung der besagten Sohle mit einer Schraube (23) durchbohrt ist.

8. Spleißkasten nach Anspruch 7, **dadurch gekennzeichnet, dass** die besagte Sohle zwei Seitenflügel (34), die auf beiden Seiten aus dem nicht-Endteil der besagten hinteren Hälfte vorspringen und eine Kerbe (33) zwischen jedem Flügel (34) und jeder Backe (32) umfasst.

9. Spleißkasten nach einem der Ansprüche 1 bis 8, **dadurch gekennzeichnet, dass** die besagte Sohle (3) einen Schaumgleitschuh (14) trägt, der auf einem vorderen Endteil dieser Sohle zurückgehalten wird, wobei er die besagten freigesetzten Fasern (10) annimmt und führt.
